# DEMANDE DE BREVET EUROPEEN

(11) **EP 4 434 416 A1**
(43) Date de publication de la demande: **25.09.2024**
(21) Numéro de dépôt: 24164737.9
(22) Date de dépôt: 20.03.2024
(51) Int. Cl.: A47J 31/44

(54) **MACHINE DE DISTRIBUTION DE BOISSON**

(30) Priorité: 23.03.2023 FR 2302731
(71) Demandeur: SEB S.A., 69130 Ecully (FR)
(72) Inventeur: GUILLOT, Annabelle, 69134 Ecully Cedex (FR); PFERSDORFF, Alban, 69134 Ecully Cedex (FR); VETILLARD, Alban, 69134 Ecully Cedex (FR)
(74) Mandataire: SEB Développement

(57) **Abrégé**

Cette machine de distribution de boisson comprend une tête de distribution de boisson (18) dont la position par rapport à une zone de réception d'un contenant est réglable et une structure de réception (29) de la tête de distribution (18) comprenant une première (42) et une deuxième (44) glissières propres à interagir avec un côté latéral respectif (46, 48) de la tête de distribution (18) pour former une première (52) respectivement deuxième (54) liaisons glissières. Conformément à l'invention, la structure de réception (29) comprend également une troisième glissière (56), positionnée entre les première (42) et deuxième (44) glissières et propre à interagir avec la tête de distribution (18) pour former une troisième liaison glissière (60). La troisième glissière (56) est suivant l'axe longitudinal plus proche de la zone de réception que la première (42) et la deuxième (44) glissières.

## Description

### Domaine technique

La présente invention se rapporte au domaine des machines de distribution de boisson, et notamment des machines à café, comprenant une zone de réception d'un contenant et une tête de distribution de boisson dont la position par rapport à la zone de réception est réglable en hauteur entre une position haute et une position basse.

### Etat de la technique

Il est connu de CN105326397 une machine à café équipée d'une tête de distribution de café dont la hauteur par rapport à la zone de réception de contenant est réglable. La tête de distribution est réglable en hauteur via deux liaisons glissières formées entre la tête de distribution et un bâti de la machine à café. La tête de distribution comprend également des butées axiales propres à coopérer avec des éléments du bâti pour limiter la course de réglage en hauteur de la tête de distribution.

Une telle machine à café permet d'adapter facilement la hauteur de la tête de distribution à la hauteur du contenant.

Cependant, dans une telle machine, la fixation de la tête de distribution au bâti, notamment lorsqu'elle est en position basse, n'est pas robuste. En effet, il existe un risque que lors de la manipulation de la tête de distribution, celle-ci pivote et/ou bascule et/ou déraille. De plus, la course de réglage en hauteur possible de la tête de distribution est réduite. En effet, l'écart entre les butées axiales et les éléments du bâti destinés à coopérer avec lesdites butées pour limiter la course de réglage en hauteur de la tête de distribution est réduit.

### Résumé de l'invention

La présente invention vise à remédier à ces inconvénients.

Le problème technique à la base de l'invention consiste à proposer une machine de distribution de boisson disposant d'une tête de distribution de boisson réglable en hauteur dont la fixation au bâti et dont la course de réglage en hauteur sont améliorées.

A cet effet, l'invention a pour objet une machine de distribution de boisson comprenant :
- un bâti propre à recevoir une unité de préparation de boisson et définissant une zone de réception d'un contenant ; et
- une tête de distribution de boisson dont la position par rapport à la zone de réception suivant un axe longitudinal de déplacement de la tête de distribution est réglable entre une position haute et une position basse,
le bâti comprenant une structure de réception de la tête de distribution comprenant une première et une deuxième glissières propres à interagir avec un côté latéral respectif de la tête de distribution pour former une première respectivement deuxième liaisons glissières.

Conformément à l'invention, la structure de réception comprend également une troisième glissière, positionnée entre les première et deuxième glissières suivant un axe transversal sensiblement perpendiculaire à l'axe longitudinal, la troisième glissière étant propre à interagir avec la tête de distribution pour former une troisième liaison glissière, la troisième glissière étant suivant l'axe longitudinal plus proche de la zone de réception que la première et la deuxième glissières.

Grâce à l'invention, la fixation de la tête de distribution et sa course de réglage sont améliorées. En effet, la troisième glissière permet d'avoir une fixation optimisée par rapport à une solution avec deux glissières. En outre, le positionnement de la troisième glissière permet d'assurer une fixation efficace même lorsque la tête de distribution est en position basse. Ainsi les risques de pivotement et/ou bascule et/ou déraillement de la tête de distribution sont réduits. Par ailleurs la troisième glissière, notamment de par sa position par rapport aux première et deuxième glissières permet d'obtenir une course de réglage en hauteur optimisée. Ainsi, la machine de distribution de boisson est adaptée à un plus grand nombre de hauteurs de contenants et l'expérience utilisateur est améliorée. Enfin un tel agencement permet également de libérer au maximum la zone de réception pour accueillir un contenant de grande taille notamment.

Selon des aspects avantageux mais non obligatoires de l'invention, une telle machine de distribution de boisson peut incorporer une ou plusieurs des caractéristiques suivantes, prises dans toute combinaison techniquement admissible.

Selon une caractéristique avantageuse de l'invention, la tête de distribution comprend :
- sur un premier côté latéral, un premier relief d'accroche à la première glissière, le premier relief d'accroche et la première glissière formant la première liaison glissière,
- sur un deuxième côté latéral, un deuxième relief d'accroche à la deuxième glissière, le deuxième relief d'accroche et la deuxième glissière formant la deuxième liaison glissière, et
- sur une partie centrale, un troisième relief d'accroche à la troisième glissière, le troisième relief d'accroche et la troisième glissière formant la troisième liaison glissière.

Un tel agencement permet d'assurer la fixation de la tête de distribution aux glissières afin d'assurer sa mobilité suivant l'axe longitudinal.

Selon une caractéristique avantageuse de l'invention, les premier, deuxième et troisième reliefs d'accroche sont formés par des rainures présentant préférentiellement une section transversale en forme de U, et les première, deuxième et troisième glissières comprennent des nervures propres à être reçues dans les rainures correspondantes.

Un tel agencement permet d'assurer à la fois un maintien et un glissement optimisé de la tête de distribution par rapport au bâti.

Selon une caractéristique avantageuse de l'invention, la tête de distribution comprend un corps de distribution de boisson définissant au moins un canal de circulation de boisson et muni avantageusement de deux sorties de boisson, le corps de distribution comprenant également les premier, deuxième et troisième reliefs d'accroche, et la tête de distribution comprend un organe de réglage de la position de la tête de distribution par rapport à la zone de réception suivant l'axe longitudinal, l'organe de réglage étant propre à être fixé au corps de distribution et comprenant une zone de préhension propre à être saisie par un utilisateur pour que l'utilisateur règle la position de la tête de distribution entre les positions haute et basse.

Un tel agencement permet de disposer de deux pièces différentes pour assurer respectivement la distribution de boisson ainsi que la translation de la tête de distribution et le réglage de la position de la tête de distribution par l'utilisateur. Ainsi chaque pièce peut avoir un design et une matière optimisés en fonction de sa fonction.

Selon une caractéristique avantageuse de l'invention, la structure de réception comprend une paroi avant et une paroi arrière délimitant un espace de réception de la tête de distribution, l'organe de réglage comprend au moins un organe de frottement contre la paroi avant et la tête de distribution comprend pour chaque organe de frottement un élément de maintien du corps de distribution en position suivant l'axe longitudinal, chaque élément de maintien étant propre à exercer une force de maintien sur l'organe de frottement correspondant pour maintenir l'organe de frottement en contact avec la paroi avant.

Un tel agencement permet de régler facilement et de manière robuste dans le temps la position de la tête de distribution par rapport à la zone de réception et permet d'immobiliser la tête de distribution à la position réglée par l'utilisateur à l'aide de l'organe de réglage.

Selon une caractéristique avantageuse de l'invention, la structure de réception comprend une paroi avant et une paroi arrière délimitant un espace de réception de la tête de distribution, les première, deuxième et troisième glissières s'étendant depuis la paroi arrière.

Une telle configuration permet de simplifier l'intégration de la tête de distribution dans le bâti et d'assurer un habillage externe de la tête de distribution et notamment d'une partie fonctionnelle de la tête de distribution.

Selon une caractéristique avantageuse de l'invention, la troisième glissière s'étend perpendiculairement à la paroi arrière et les première et deuxième glissières s'étendent parallèlement à la paroi arrière.

Un tel agencement permet de minimiser l'encombrement de la tête de distribution et de libérer au maximum la zone de réception pour accueillir un contenant de grande taille notamment.

Selon une caractéristique avantageuse de l'invention, la tête de distribution comprend une butée supérieure propre à interagir avec un fond d'une fente formée dans la paroi avant lorsque la tête de distribution est en position basse pour empêcher le déplacement de la tête de distribution vers le bas au-delà de la position basse.

Une telle configuration permet de limiter la course de réglage de la tête de distribution vers le bas de manière efficace et ainsi d'éviter son déraillement par rapport aux glissières.

Selon une caractéristique avantageuse de l'invention, la troisième glissière comprend une portion inférieure située en dessous des première et deuxième glissières, et une portion supérieure située en regard d'une partie inférieure des première et deuxième glissières suivant l'axe transversal.

Un tel agencement permet de garantir que même en position haute de la tête de distribution la troisième glissière est toujours en contact avec la tête de distribution et celle-ci ne peut pas dérailler par rapport à la troisième glissière.

Selon une caractéristique avantageuse de l'invention, la tête de distribution comprend une première et une deuxième butées inférieures propres à interagir respectivement avec une extrémité inférieure de la première glissière et une extrémité inférieure de la deuxième glissière lorsque la tête de distribution est en position haute pour empêcher le déplacement de la tête de distribution vers le haut au-delà de la position haute.

Une telle configuration permet de limiter la course de réglage de la tête de distribution vers le haut de manière efficace et ainsi d'éviter son déraillement par rapport aux glissières. En outre, un tel agencement permet de s'assurer que la tête de distribution cache la troisième glissière même lorsque la tête de distribution est en position haute.

Selon une caractéristique avantageuse de l'invention, le troisième relief d'accroche s'étend depuis un côté inférieur de la tête de distribution et les premier et deuxième reliefs d'accroche s'étendent depuis un côté supérieur de la tête de distribution.

Un tel agencement permet d'assurer le maintien par rapport au bâti d'une partie supérieure de la tête de distribution essentiellement via les première et deuxième glissières et le maintien par rapport au bâti d'une partie inférieure de la tête de distribution essentiellement via la troisième glissière. En outre, un tel agencement permet à la tête de distribution de cacher la troisième glissière même lorsque la tête de distribution est en position haute.

Selon une caractéristique avantageuse de l'invention, la longueur de la portion supérieure est comprise entre 2% et 20% de la longueur de la première ou de la deuxième glissières.

Selon une caractéristique avantageuse de l'invention, chaque élément de maintien est positionné entre le corps de distribution et l'organe de frottement.

Selon une caractéristique avantageuse de l'invention, l'organe de réglage comprend une façade avant propre à être positionnée en regard de la paroi avant et en ce que chaque organe de frottement est propre à être fixé à la façade avant de sorte à être déplaçable par rapport à la façade avant suivant un axe perpendiculaire à la paroi avant sous l'effet de la force de maintien appliquée par l'élément de maintien sur l'organe de frottement correspondant.

Un tel agencement permet de garantir un frottement optimisé de chaque organe de frottement et ainsi de maintenir efficacement le positionnement de la tête de distribution selon l'axe longitudinal une fois celui-ci réglé par l'utilisateur.

Selon une caractéristique avantageuse de l'invention, chaque organe de frottement comprend une extrémité supérieure reliée à un bord supérieur de la façade avant et en ce que la façade avant comprend un évidement continu le long de bords latéraux et d'un bord inférieur de l'organe de frottement.

Un tel agencement permet de garantir un déplacement de chaque organe de frottement par rapport à la façade avant sous l'effet de l'élément de maintien correspondant. Cela permet de maintenir efficacement le positionnement de la tête de distribution selon l'axe longitudinal une fois celui-ci réglé par l'utilisateur et d'autoriser le déplacement de la tête de distribution lorsque l'utilisateur manipule l'organe de réglage.

Selon une caractéristique avantageuse de l'invention, l'organe de réglage comprend deux organes de frottement situés de part et d'autre d'un axe central de l'organe de réglage.

Un tel agencement permet de garantir la robustesse dans le temps de la machine et notamment du réglage du positionnement de la tête de distribution.

Selon une caractéristique avantageuse de l'invention, l'organe de réglage définit un logement de réception du corps de distribution et comprend deux parois latérales issues de la façade avant propres à coopérer avec respectivement un bord latéral extérieur de la première glissière et un bord latéral extérieur de la deuxième glissière.

Un tel agencement permet de faciliter le guidage de la tête de distribution le long des glissières.

Selon une caractéristique avantageuse de l'invention, la machine de distribution de boisson est une machine à café.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une machine de distribution de boisson et notamment d'une machine à café selon un mode de réalisation de l'invention comprenant notamment un bâti et une tête de distribution de boisson ;
La figure 2 est une vue en perspective de la tête de distribution et d'une face avant du bâti de la figure 1, un habillage externe du bâti étant omis ;
La figure 3 est une vue en éclaté de la tête de distribution et de la face avant du bâti de la figure 2 ;
La figure 4 est une vue partielle de dessus de la tête de distribution et de la face avant du bâti de la figure 2 ;
La figure 5 est une vue partielle en perspective de derrière de la tête de distribution et de la face avant du bâti de la figure 2 ;
La figure 6 est une vue en perspective de devant d'un organe de réglage de la position de la tête de distribution appartenant à la tête de distribution des figures 1 à 5.
La figure 7 est une vue en perspective de derrière d'un corps de distribution de boisson appartenant à la tête de distribution des figures 1 à 5.
La figure 8 est une vue partielle en coupe selon le plan de coupe vertical selon la ligne VIII-VIII de la tête de distribution et de la face avant du bâti de la figure 2.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes « horizontal », « vertical », « inférieur », « supérieur », « haut », « bas », « avant », « arrière », « longitudinal », « transversal », employés pour décrire la machine de distribution de boisson font référence à ce dispositif en situation d'usage, lorsqu'il repose à plat sur un plan de travail.

De plus les termes « amont » et « aval » ou « entrée » et « sortie » sont définis en fonction d'un sens de circulation de la boisson dans la machine de distribution de boisson.

Les termes « externe » et « interne » de même que les termes « extérieur » et « intérieur » sont définis par rapport à un axe central de la machine de distribution de boisson. Ainsi une portion/partie interne sera plus proche de l'axe central qu'une portion/partie externe.

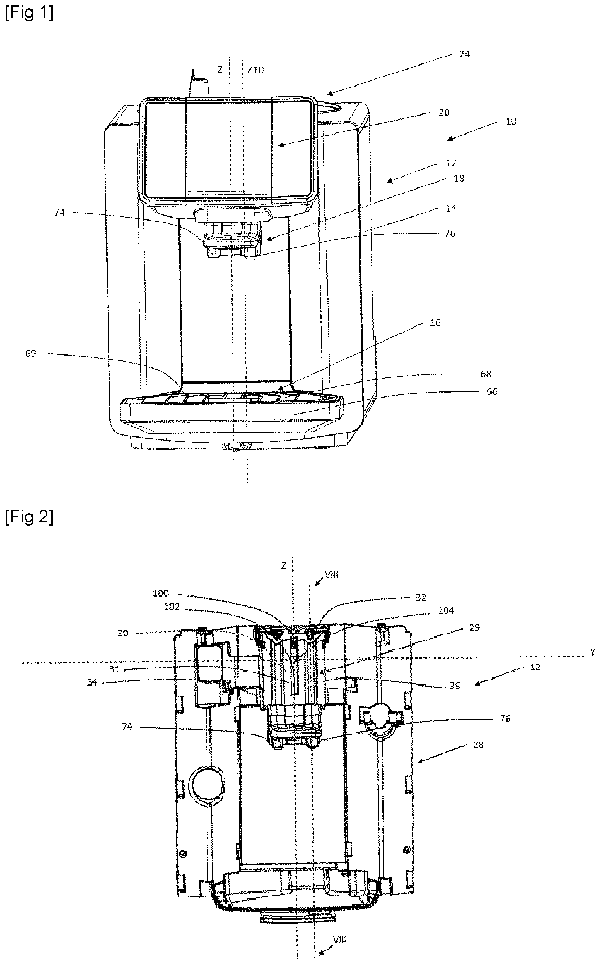

La machine de distribution de boisson représentée à la figure 1 est une machine à café 10. En variante, la machine de distribution de boisson est une machine de distribution d'eau filtrée et/ou gazéifiée ou une machine de distribution de thé.

La machine à café 10 est avantageusement une machine à café automatique.

La machine à café 10 comporte un bâti 12 équipé d'un habillage externe 14 et une zone de réception 16 d'un contenant ou récipient sur laquelle un contenant/récipient, non représenté, peut être disposé.

La machine à café 10 comprend également une tête de distribution de boisson 18 dont la position par rapport à la zone de réception 16 suivant un axe longitudinal Z de déplacement de la tête de distribution 18 est réglable entre une position haute et une position basse. Sur les différentes figures la tête de distribution de boisson 18 est en position haute.

L'axe longitudinal Z s'étend suivant une direction verticale.

La machine à café 10 définit un axe central Z10 passant par un centre de la machine et s'étendant parallèlement à l'axe longitudinal Z.

La machine à café 10 comprend avantageusement une interface homme machine 20 via laquelle un utilisateur est propre à sélectionner un type de boisson à distribuer et avantageusement à saisir des paramètres de réglage de la machine à café 10.

La machine à café 10 comporte également une unité de préparation de boisson, non représentée, intégrée au bâti 12.

L'unité de préparation comprend un circuit de commande pour gérer la réalisation d'une boisson à partir des instructions données par l'utilisateur.

L'unité de préparation comprend également une chaudière produisant de l'eau chaude et/ou de la vapeur et un réservoir formant une réserve en eau froide. Le réservoir permet d'alimenter la chaudière pour produire de l'eau chaude et/ou de la vapeur.

L'unité de préparation comprend un réservoir de grains de café 24, un moulin à grains automatique et une chambre d'infusion propre à recevoir les grains de café moulus et à être alimentée en eau chaude par la chaudière.

La chambre d'infusion est reliée fluidiquement à la tête de distribution 18 de manière à ce que la machine 10 soit propre à distribuer une boisson à base de café.

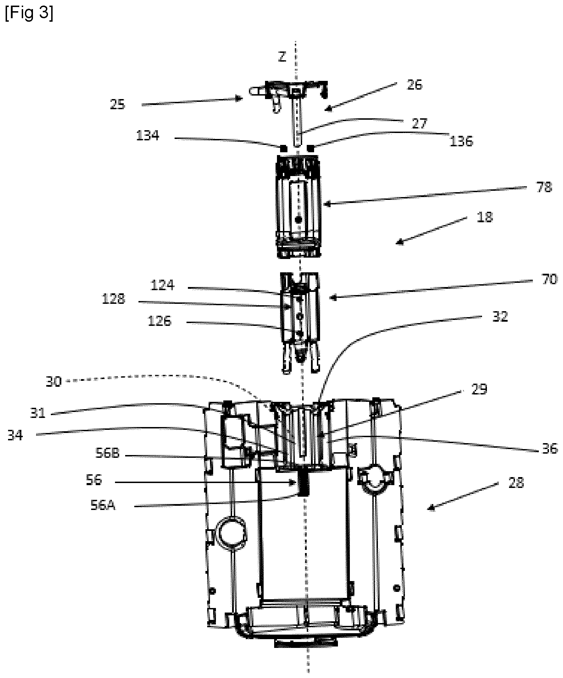

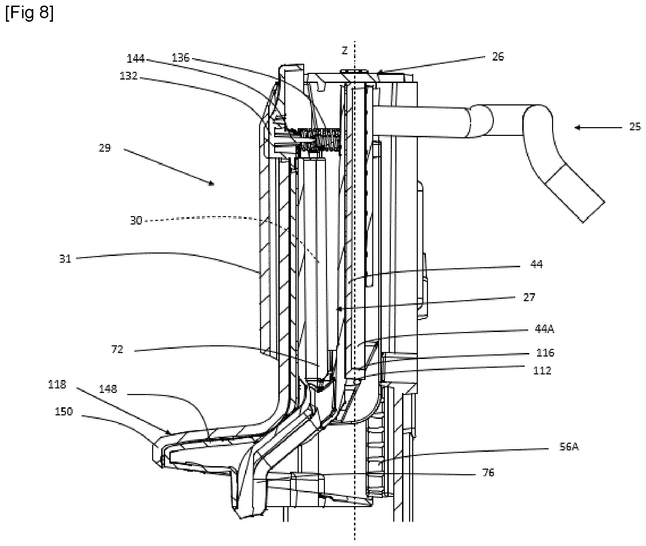

A cet effet, la machine à café comprend un conduit souple 25 de distribution de café et un organe d'amenée de boisson 26 à la tête de distribution 18 représentés sur les figures 3 et 8. Le conduit souple 25 relie fluidiquement la chambre d'infusion à l'organe d'amenée de boisson 26. L'organe d'amenée de boisson 26 est fixé au bâti et comprend notamment un tube 27 s'étendant suivant l'axe longitudinal Z et propre à distribuer la boisson à la tête de distribution 18.

Le bâti 12 définit la zone de réception 16 du contenant. Le bâti 12 a une forme globale de parallélépipède rectangle.

Le bâti 12 comprend une face avant 28 représentée aux figures 2 et 3 sur lesquelles l'habillage externe 14 du bâti 12 est omis.

Le bâti 12 et notamment sa face avant 28 comprend une structure de réception 29 de la tête de distribution 18.

La structure de réception 29 définit un espace 30 de réception de la tête de distribution 18. Plus précisément, la structure de réception 29 comprend une paroi avant 31, une paroi arrière 32 et deux parois latérales 34, 36 délimitant l'espace de réception 30 de la tête de distribution 18.

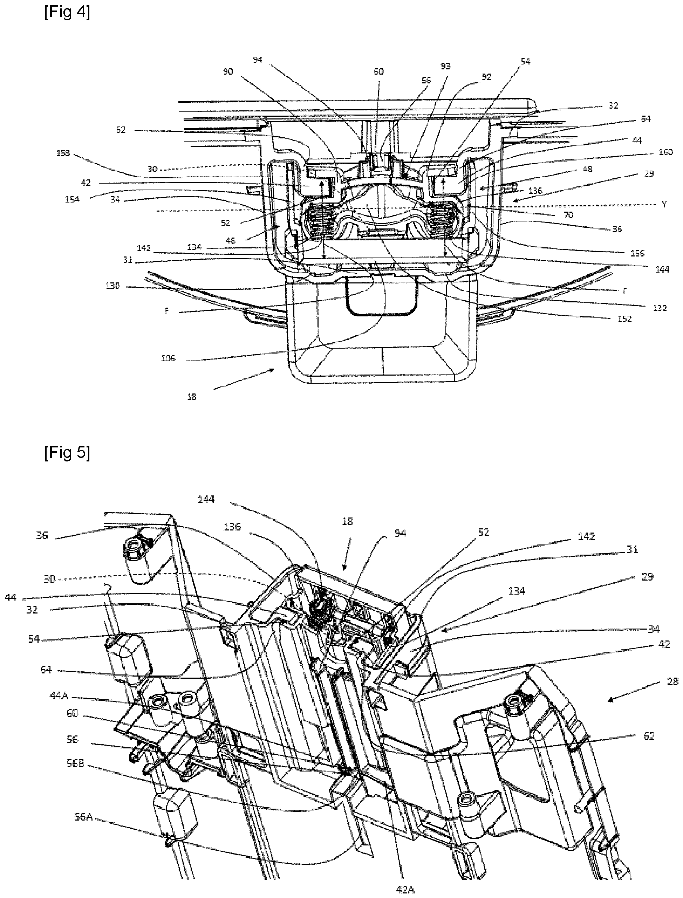

Avantageusement, et comme représenté à la figure 5, la paroi arrière 32 est ouverte pour faciliter l'installation de la tête de distribution 18 dans la structure de réception 29 et pour permettre le passage du conduit souple 25.

Comme visible à la figure 4, la structure de réception 29 comprend une première 42 et une deuxième 44 glissières propres à interagir avec un côté latéral 46, 48 respectif de la tête de distribution pour former une première 52 respectivement deuxième 54 liaisons glissières.

La structure de réception 29 comprend également, une troisième glissière, 56 positionnée entre les première 42 et deuxième 44 glissières suivant un axe transversal Y sensiblement perpendiculaire à l'axe longitudinal Z.

La troisième glissière 56 est propre à interagir avec la tête de distribution 18 pour former une troisième liaison glissière 60.

La troisième glissière 56 est suivant l'axe longitudinal Z plus proche de la zone de réception 16 que la première 42 et la deuxième 44 glissières.

Les première 42, deuxième 44 et troisième 56 glissières s'étendent parallèlement à l'axe longitudinal Z et comprennent par exemple des nervures.

Les première 42, deuxième 44 et troisième 56 glissières s'étendent depuis la paroi arrière 32, c'est-à-dire qu'elles sont rattachées à la paroi arrière 32.

Plus précisément, la troisième glissière 56 s'étend depuis la paroi arrière perpendiculairement à la paroi arrière 32 et les première 42 et deuxième 44 glissières s'étendent depuis la paroi arrière parallèlement à la paroi arrière 32.

Les première 42 et deuxième 44 glissières sont rattachées à la paroi arrière 32 via des liaisons de connexion 62, 64 s'étendant entre la paroi arrière 32 et la glissière 42, 44 correspondante. Chaque liaison de connexion 62, 64 comprend au moins une composante s'étendant perpendiculairement à la paroi arrière 32 vers l'avant.

Les première 42 et deuxième 44 glissières sont situées en regard l'une de l'autre selon l'axe transversal Y et s'étendent sur une hauteur similaire.

La troisième glissière 56 est positionnée à équidistance de la premier 42 et la deuxième 44 glissières suivant l'axe transversal Y.

La troisième glissière 56 comprend une portion inférieure 56A située en dessous des première 42 et deuxième 44 glissières, et une portion supérieure 56B située en regard d'une partie inférieure 42A, 44A des première et deuxième glissières suivant l'axe transversal Y.

La longueur de la portion supérieure 56B selon l'axe longitudinal Z est avantageusement comprise entre 2% et 20% de la longueur de la première 42 ou de la deuxième 44 glissières.

La longueur de la portion inférieure 56A selon l'axe longitudinal Z est avantageusement comprise entre 20% et 50% de la longueur de la première 42 ou de la deuxième 44 glissières.

Avantageusement la longueur de la troisième glissière 56 selon l'axe longitudinal Z est comprise entre 15% et 50% de la longueur de la première 42 ou de la deuxième 44 glissières.

Un tel agencement des glissières 42, 44, 56 permet de libérer au maximum la zone de réception 16 pour accueillir un contenant de grande taille notamment.

Comme visible à la figure 1, la zone de réception 16 est formée par un bac d'égouttement 66 sur lequel est positionné un support 68 propre à recevoir le contenant. Le support 68 comprend des ouvertures traversantes 69 pour permettre l'écoulement de boisson reçu sur le support 68 vers le bac d'égouttement 66.

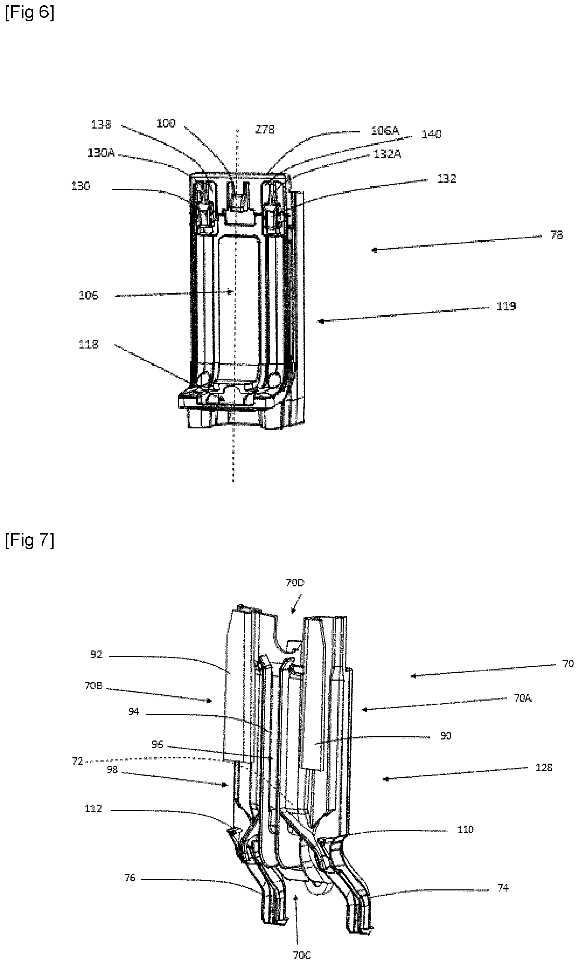

La tête de distribution de boisson 18 comprend un corps de distribution de boisson 70 visible à la figure 7 définissant au moins un canal 72 de circulation de boisson et muni avantageusement de deux sorties de boisson 74, 76.

Comme représenté à la figure 8, les sorties de boisson 74, 76 sont propres à être alimentées en boisson via l'organe d'amenée de boisson 26 et notamment le tube 27 qui est propre à distribuer la boisson à proximité des sorties de boisson 74, 76. L'organe d'amenée de boisson 26 est avantageusement propre à être fixé à structure de réception 29.

La tête de distribution de boisson 18 comprend également un organe de réglage 78 de la position de la tête de distribution 18 par rapport à la zone de réception 16 suivant l'axe longitudinal Z.

La tête de distribution de boisson 18 comprend :
- sur le premier côté latéral 46, un premier relief d'accroche 90 à la première glissière 42,
- sur le deuxième côté latéral 48, un deuxième relief d'accroche 92 à la deuxième glissière 44, et
- sur une partie centrale 93, un troisième relief d'accroche 94 à la troisième glissière 56.

Le premier relief d'accroche 90 et la première glissière 42 forment ensemble la première liaison glissière 52, tandis que le deuxième relief d'accroche 92 et la deuxième glissière 44 forment ensemble la deuxième liaison glissière 54 et que le troisième relief d'accroche 94 et la troisième glissière 56 forment ensemble la troisième liaison glissière 60.

Comme représenté à la figure 7, les premier 90 et deuxième 92 reliefs d'accroche sont de préférence positionnés sur un côté latéral respectif 70A, 70B du corps de distribution de boisson 70 et le troisième relief d'accroche 94 est de préférence positionné sur une partie centrale 96 du corps de distribution de boisson et notamment d'une face arrière 98 du corps de distribution 70.

Les premier 90, deuxième 92 et troisième 94 reliefs d'accroche sont formés par des rainures présentant préférentiellement une section transversale en forme de U. Les nervures formant les glissières 42, 44, 56 étant propres à être reçues dans les rainures correspondantes.

En variante les rainures sont remplacées par des nervures et inversement.

le troisième relief d'accroche 94 s'étend depuis un côté inférieur 70C du corps de distribution 70 et les premier 90 et deuxième 92 reliefs d'accroche s'étendent depuis un côté supérieur 70D du corps de distribution 70.

En d'autres termes le troisième relief d'accroche 94 débouche sur le côté inférieur 70C et les premier 90 et deuxième 92 reliefs d'accroche débouchent sur le côté supérieur 70D.

Ainsi le corps de distribution de boisson 70 forme un chariot mobile le long des glissières 42, 44, 56 permettant le déplacement de la tête de distribution de boisson 18 suivant l'axe longitudinal Z.

Un tel agencement du corps de distribution 70 par rapport au bâti 12 permet, via l'interaction des glissières 42, 44, 56 et des reliefs d'accroche, 90, 92, 94 d'obtenir une tête de distribution 18 dont le réglage en hauteur par l'utilisateur est simplifié et dont la fixation au bâti 12 est optimisée.

En outre, le positionnement de la troisième liaison glissière 60 permet d'obtenir une course de réglage en hauteur optimisée tout en assurant une fixation efficace de la tête de distribution 18 au bâti 12, même lorsque la tête de distribution est en position basse. Ainsi les risques de pivotement et/ou bascule et/ou déraillement de la tête de distribution 18 sont réduits. Ainsi, la machine de distribution de boisson est adaptée à un plus grand nombre de hauteurs de contenants et l'expérience utilisateur est améliorée.

De plus, le positionnement relatif des glissières 42, 44, 56 et des reliefs d'accroche 90, 92, 94 permet d'assurer le maintien par rapport au bâti 12 d'une partie supérieure de la tête de distribution 18 essentiellement via les première et deuxième glissières 42, 44 et le maintien par rapport au bâti 12 d'une partie inférieure de la tête de distribution 18 essentiellement via la troisième glissière 56.

Comme visible à la figure 2, la tête de distribution 18 comprend également une butée supérieure 100 propre à interagir avec un fond 102 d'une fente 104 formée dans la paroi avant 31 lorsque la tête de distribution 18 est en position basse pour empêcher le déplacement de la tête de distribution 18 vers le bas au-delà de la position basse.

Avantageusement, la butée supérieure 100 est formée sur l'organe de réglage 78 et notamment sur une façade avant 106 de l'organe de réglage 78 visible à la figure 6.

La tête de distribution 18 comprend également une première 110 et une deuxième 112 butées inférieures propres à interagir respectivement avec une extrémité inférieure, non représentée, de la première glissière 42 et une extrémité inférieure 116 de la deuxième glissière 44 lorsque la tête de distribution 18 est en position haute pour empêcher le déplacement de la tête de distribution 18 vers le haut au-delà de la position haute (voir figure 8).

Comme visible à la figure 7, les butées inférieures 110, 112 sont de préférence formées sur la face arrière 98 du corps de distribution 70.

Un tel agencement des butées inférieures 110, 112 et des glissières 42, 44, 56 permet de garantir que même en position haute de la tête de distribution 18 la troisième glissière 56 est toujours en contact avec la tête de distribution 18 et celle-ci ne peut pas dérailler par rapport à la troisième glissière 56.

L'organe de réglage 78 est représenté à la figure 6 et comprend une zone de préhension 118 propre à être saisie par un utilisateur pour que l'utilisateur règle la position de la tête de distribution 18 entre les positions haute et basse.

L'organe de réglage 78 est propre à être fixé au corps de distribution 70.

L'organe de réglage 78 comprend notamment sur une façade arrière 119 deux logements, non visibles sur les figures, propres à recevoir des pions de fixation 124, 126 formés sur une face avant 128 du corps de distribution 70 (voir figure 3). Chaque logement forme un élément de fixation de l'organe de réglage 78 au corps de distribution 70.

L'organe de réglage 78 comprend au moins un organe de frottement 130, 132 contre la paroi avant 31. Chaque organe de frottement 130, 132 est propre à frotter contre une face arrière de la paroi avant 31.

Plus précisément et comme représenté sur les figures, l'organe de réglage 78 comprend deux organes de frottement 130, 132 situés de part et d'autre d'un axe central Z78 de l'organe de réglage 78 parallèle à l'axe longitudinal Z lorsque la tête de distribution est installée dans l'espace de réception 30.

La tête de distribution 18 comprend pour chaque organe de frottement 130, 132 un élément de maintien 134, 136 du corps de distribution 70 en position suivant l'axe longitudinal Z.

Chaque élément de maintien 134, 136 est par exemple un ressort et est propre à exercer une force de maintien F sur l'organe de frottement 130, 132 correspondant pour maintenir l'organe de frottement 130, 132 en contact avec la paroi avant 31 et notamment la face arrière de la paroi avant 31.

Chaque élément de maintien 134, 136 est positionné entre le corps de distribution 70 et l'organe de frottement 130, 132 correspondant. Chaque élément de maintien 134, 136 est propre à exercer la force de maintien F correspondante de sorte à maintenir l'organe de frottement 130, 132 correspondant en contact avec la paroi avant 31 et le corps de distribution 70 en contact avec la paroi arrière 32 et notamment la première 42 ou la deuxième glissières 44.

Ainsi chaque élément de maintien 134, 136 permet de par son interaction avec le corps de distribution 70 et les organes de frottement 130, 132 de coincer la tête de distribution 18 dans la structure de réception 29 à une position déterminée suivant l'axe longitudinal Z une fois que l'utilisateur n'applique plus d'effort de déplacement de la tête 18 sur la zone de préhension 118.

Comme représenté à la figure 6, chaque organe de frottement 130, 132 est propre à être fixé à la façade avant 106 de sorte à être déplaçable par rapport à la façade avant 106 suivant un axe perpendiculaire à la paroi avant 31 sous l'effet de la force de maintien F appliquée par l'élément de maintien correspondant 134, 136 sur l'organe de frottement 130, 132.

Plus précisément, chaque organe de frottement 130, 132 comprend une extrémité supérieure 130A, 132A reliée à un bord supérieur 106A de la façade avant 106 et la façade avant 106 comprend un évidement continu 138, 140 le long de bords latéraux et d'un bord inférieur de l'organe de frottement 130, 132.

Chaque organe de frottement 130, 132 forme un patin de frottement/freinage contre la face arrière de la paroi avant 31.

Comme visible à la figure 5, chaque organe de frottement 130, 132 comprend également une saillie axiale 142, 144 orientée vers la paroi arrière 32.

Chaque organe de frottement 130, 132 est positionné au niveau d'une partie supérieure de la façade avant 106 et s'étend avantageusement depuis le bord supérieur 106A de la façade avant 106.

Chaque élément de maintien 134, 136 comprend une première extrémité positionnée autour de la saillie axiale correspondante 142, 144 et en appui contre une face arrière de l'organe de frottement 130, 132 et une deuxième extrémité en appui contre le corps de distribution 70.

L'organe de réglage 78 a donc une structure simplifiée et permet à l'aide des éléments de maintien 134, 136 d'offrir à l'utilisateur une possibilité de réglage facie et robuste dans le temps de la hauteur de la tête de distribution 18 par rapport à la zone de réception 16.

Avantageusement, comme représenté à la figure 8, l'organe de réglage 78 comprend une première pièce monobloc 148 formant la façade avant et chaque organe de frottement 130, 132 et une deuxième pièce monobloc 150 propre à être fixée à la première pièce 148 et formant un enjoliveur de la première pièce.

La première pièce 148 est de préférence dans un matériau différent de celui de la deuxième pièce 150. La deuxième pièce 150 définit un contour de la zone de préhension 118 de l'organe de réglage par l'utilisateur.

Avantageusement, comme visible à la figure 4, l'organe de réglage 78 définit un logement 152 de réception du corps de distribution 70 et comprend deux parois latérales 154, 156 issues de la façade avant 106 et s'étendant vers l'arrière, propres à coopérer avec respectivement un bord latéral extérieur 158 de la première glissière 42 et un bord latéral extérieur 160 de la deuxième glissière 44. La façade avant 106 et les parois latérales 154, 156 délimitent le logement 152.

Un tel agencement permet de faciliter le guidage de la tête de distribution le long des glissières 42, 44.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Machine de distribution de boisson (10) comprenant :
- un bâti (12) propre à recevoir une unité de préparation de boisson et définissant une zone de réception (16) d'un contenant ; et
- une tête de distribution de boisson (18) dont la position par rapport à la zone de réception (16) suivant un axe longitudinal (Z) de déplacement de la tête de distribution (18) est réglable entre une position haute et une position basse,
le bâti (12) comprenant une structure de réception (29) de la tête de distribution (18) comprenant une première (42) et une deuxième (44) glissières propres à interagir avec un côté latéral respectif (46, 48) de la tête de distribution (18) pour former une première (52) respectivement deuxième (54) liaisons glissières,
**caractérisée en ce que** la structure de réception (29) comprend également une troisième glissière (56), positionnée entre les première (42) et deuxième (44) glissières suivant un axe transversal (Y) sensiblement perpendiculaire à l'axe longitudinal (Z), la troisième glissière (56) étant propre à interagir avec la tête de distribution (18) pour former une troisième liaison glissière (60), la troisième glissière (56) étant suivant l'axe longitudinal (Z) plus proche de la zone de réception (16) que la première (42) et la deuxième (44) glissières.

2. Machine de distribution de boisson (10) selon la revendication 1, **caractérisée en ce que** la tête de distribution (18) comprend :
- sur un premier côté latéral (46), un premier relief d'accroche (90) à la première glissière (42), le premier relief d'accroche (90) et la première glissière (42) formant la première liaison glissière (52),
- sur un deuxième côté latéral (48), un deuxième relief d'accroche (92) à la deuxième glissière (44), le deuxième relief d'accroche (92) et la deuxième glissière (44) formant la deuxième liaison glissière (54), et
- sur une partie centrale (93), un troisième relief d'accroche (94) à la troisième glissière (56), le troisième relief d'accroche (94) et la troisième glissière (56) formant la troisième liaison glissière (60).

3. Machine de distribution de boisson selon la revendication 2, **caractérisée en ce que** les premier (90), deuxième (92) et troisième (94) reliefs d'accroche sont formés par des rainures présentant préférentiellement une section transversale en forme de U, et **en ce que** les première, (42) deuxième (44) et troisième (56) glissières comprennent des nervures propres à être reçues dans les rainures (90, 92, 94) correspondantes.

4. Machine de distribution de boisson selon l'une quelconque des revendications 2 ou 3, **caractérisée en ce que** la tête de distribution (18) comprend un corps de distribution de boisson (70) définissant au moins un canal de circulation de boisson (72) et muni avantageusement de deux sorties de boisson (74, 76), le corps de distribution (70) comprenant également les premier (90), deuxième (92) et troisième (94) reliefs d'accroche, et **en ce que** la tête de distribution (18) comprend un organe de réglage (78) de la position de la tête de distribution (18) par rapport à la zone de réception (16) suivant l'axe longitudinal (Z), l'organe de réglage (78) étant propre à être fixé au corps de distribution (70) et comprenant une zone de préhension (118) propre à être saisie par un utilisateur pour que l'utilisateur règle la position de la tête de distribution (18) entre les positions haute et basse.

5. Machine de distribution de boisson selon la revendication 4, **caractérisée en ce que** la structure de réception (29) comprend une paroi avant (31) et une paroi arrière (32) délimitant un espace de réception (30) de la tête de distribution, **en ce que** l'organe de réglage comprend au moins un organe de frottement (130, 132) contre la paroi avant (31) et **en ce que** la tête de distribution (18) comprend pour chaque organe de frottement (130, 132) un élément de maintien (134, 136) du corps de distribution (70) en position suivant l'axe longitudinal (Z), chaque élément de maintien (134, 136) étant propre à exercer une force de maintien (F) sur l'organe de frottement correspondant (130, 132) pour maintenir l'organe de frottement (130, 132) en contact avec la paroi avant (31).

6. Machine de distribution de boisson selon l'une quelconque des revendications précédentes, **caractérisée en ce que** la structure de réception (29) comprend une paroi avant (31) et une paroi arrière (32) délimitant un espace de réception (30) de la tête de distribution (18), les première (42), deuxième (44) et troisième (56) glissières s'étendant depuis la paroi arrière (32).

7. Machine de distribution de boisson selon la revendication 6, **caractérisée en ce que** la troisième glissière (56) s'étend perpendiculairement à la paroi arrière (32) et **en ce que** les première (42) et deuxième (44) glissières s'étendent parallèlement à la paroi arrière (32).

8. Machine de distribution de boisson selon l'une quelconque des revendications 5 à 7, **caractérisée en ce que** la tête de distribution comprend une butée supérieure (100) propre à interagir avec un fond (102) d'une fente (104) formée dans la paroi avant (31) lorsque la tête de distribution (18) est en position basse pour empêcher le déplacement de la tête de distribution (18) vers le bas au-delà de la position basse.

9. Machine de distribution de boisson selon l'une quelconque des revendications précédentes, **caractérisée en ce que** la troisième glissière (56) comprend une portion inférieure (56A) située en dessous des première (42) et deuxième (44) glissières, et une portion supérieure (56B) située en regard d'une partie inférieure (42A, 44A) des première et deuxième glissières suivant l'axe transversal (Y).

10. Machine de distribution de boisson selon l'une quelconque des revendications précédentes, **caractérisée en ce que** la tête de distribution (18) comprend une première (110) et une deuxième (112) butées inférieures propres à interagir respectivement avec une extrémité inférieure de la première glissière et une extrémité inférieure (116) de la deuxième glissière (44) lorsque la tête de distribution (18) est en position haute pour empêcher le déplacement de la tête de distribution (18) vers le haut au-delà de la position haute.
